# EUROPEAN PATENT SPECIFICATION

(11) **EP 1 577 132 B1**
(45) Date of publication and mention of the grant of the patent: **05.05.2010**
(21) Application number: 05004685.3
(22) Date of filing: 03.03.2005
(51) Int. Cl.: B60H 1/32, B60H 1/00, H02H 7/122

(54) **Vehicle air conditioner**
Fahrzeugklimaanlage
Dispositif de climatisation pour véhicule

(30) Priority: 15.03.2004 JP 2004072306
(43) Date of publication of application: 21.09.2005
(73) Proprietor: SANYO ELECTRIC CO., LTD., Moriguchi-shi, Osaka, (JP)
(72) Inventor: Kubo, Mamoru, Isesaki-shi Gunma 370-0113 (JP)
(74) Representative: Glawe, Delfs, Moll

(56) References cited:
- US-A- 5 604 672
- US-A- 5 714 806
- US-A1- 2003 010 487
- PATENT ABSTRACTS OF JAPAN vol. 018, no. 589 (M-1701), 10 November 1994 (1994-11-10) & JP 06 219141 A (MATSUSHITA ELECTRIC IND CO LTD), 9 August 1994 (1994-08-09)

## Description

### BACKGROUND OF THE INVENTION

The present invention relates to a vehicle air conditioner comprising a parallel circuit of a charging device and a switching device connected between a battery and a main shaft motor inverter.

A vehicle air conditioner (automobile air conditioner) of this kind typically comprises a charging device serially connected to a direct-current power source, and a switching device connected in parallel to this charging device. This vehicle air conditioner comprises a high-capacity condenser charged from the direct-current power source via the charging device, an electrically operated compressor driving device which is supplied with electric power from the direct-current power source via the switching device and which drives an electrically operated compressor for air conditioning, and a control device which actuates the charging device before closing the switching device and then actuates the electrically operated compressor driving device (refer to Patent No. 3166453 JP 06 219 141).

A power supply circuit for such a vehicle air conditioner is provided with a current fuse serially connected to a battery, a switching element which is connected in parallel to the battery and the current fuse and which performs switching to convert, into a three phase pseudo alternating-current voltage, a direct-current voltage from the battery so as to drive the electrically operated compressor for air conditioning, and a diode which is connected in parallel to the individual switching element and which absorbs a surge voltage generated by the switching of the switching element. Further, the current fuse is blown when the battery is reversely connected, thereby protecting semiconductors and the battery from breakdown (Patent No. 3341327 published as JP 06 219 141).

However, there is a problem of increased costs because the former vehicle air conditioner also has to be provided with a charging device.

Furthermore, the latter vehicle air conditioner protects electric circuits by blowing the current fuse, for example, when the power supply circuit such as a connector or a wiring connection is inadvertently connected with reversed polarity. In this case, the electric circuits can be protected but the current fuse is blown, which leads to a problem that the current fuse can not be protected.

US-A-5 604 672 discloses a vehicle air conditioner according to the preamble of claim 1, and US-5 714 806 discloses a vehicle air conditioner according to the preamble of claim 3.

### SUMMARY OF THE INVENTION

The present invention has been attained to solve the foregoing conventional technical problems, and is intended to provide a vehicle air conditioner which can protect an inverter for an electrically driven compressor by opening a switching device for air conditioning when an abnormality occurs in circuits on a vehicle side and which can protect the circuits on the vehicle side by opening the switching device for air conditioning when an abnormality occurs at the inverter for an electrically driven compressor.

This object is achieved by a vehicle air conditioner as claimed in claims 1 and 3, respectively; the dependent claims are related to further developments of the invention.

According to the present invention, the inverter for an electrically operated compressor can be protected by opening the switching device for air conditioning when an abnormality occurs in the circuits on the vehicle side. Also, the circuits on the vehicle side can be protected by opening the switching device for air conditioning when an abnormality occurs at the inverter for an electrically operated compressor.

Particularly, since the condenser for air conditioning can be charged by the charging device on the vehicle side in this case, no specific charging device is additionally needed for air conditioning.

Furthermore, in the vehicle air conditioner of the present invention, a diode directed forward to the condenser side is connected on a previous stage of the condenser for air conditioning, in the above.

According to this invention, in addition to the above, the circuits can be protected, for example, even if a power supply such as a wire or a connector is erroneously connected with reversed polarity, and an electric shock can be avoided even when a connecting part of the circuits for air conditioning is touched.

Furthermore, the vehicle air conditioner of the present invention is used for a vehicle provided with a battery, and a parallel circuit of a charging device and a switching device connected between the battery and an inverter for a main shaft motor, and the vehicle air conditioner comprises a condenser for air conditioning which is charged from the battery via the charging device, and an inverter for an electrically operated compressor for air conditioning which is supplied with electric power from the battery via the switching device, wherein a switching device for air conditioning is provided between the condenser for air conditioning and the inverter for an electrically operated compressor, and the switching device for air conditioning is closed after completion of charging in accordance with a terminal voltage of the condenser for air conditioning.

According to this invention, the completion of the charging of the condenser for air conditioning is judged at the circuits for air conditioning on its own, and the switching device for air conditioning can be closed to start supplying electric power to the inverter for an electrically operated compressor, so that it is unnecessary to send and receive data between the circuits on an air conditioning side and the circuits on the vehicle side. In this way, independent control is possible for the circuits on the air conditioning side, resulting in wide versatility.

Furthermore, the vehicle air conditioner of the present invention is characterized in that, in the above, the switching device for air conditioning is opened at an abnormal high voltage in accordance with a voltage applied to the inverter for an electrically operated compressor.

According to this invention, in addition to the above, the electrically operated compressor inverter can be protected by opening the switching device for air conditioning when an abnormality occurs in the circuits on the vehicle side. Further, the circuits on the vehicle side can also be protected by opening the switching device for air conditioning when an abnormality occurs at the inverter for an electrically operated compressor. Particularly, since the condenser for air conditioning can be charged by the charging device on the vehicle side in this case, no specific charging device is additionally needed for air conditioning.

### BRIEF DESCRIPTION OF THE DRAWING

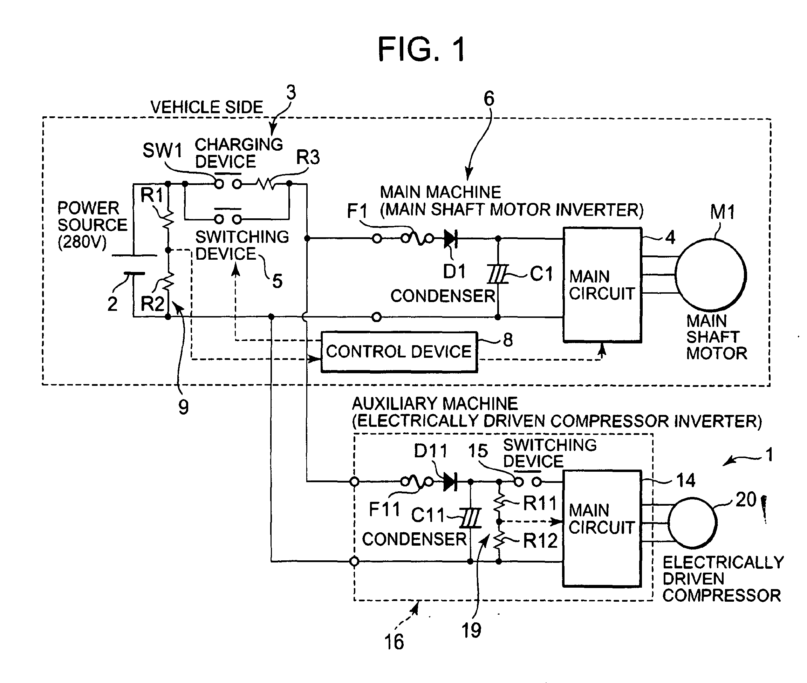

FIG. 1 is an electric circuit diagram of an electric automobile equipped with a vehicle air conditioner of the present invention.

### DETAILED DESCRIPTION OF THE PREFERRED EMBODIMENT

The present invention has achieved an object of protecting an inverter for air conditioning when an abnormality occurs in circuits, by opening a switching device provided between a condenser for air conditioning and an electrically operated compressor inverter in accordance with a terminal voltage of the condenser for air conditioning.

### (Embodiment 1)

An embodiment of the present invention will next be described in reference to the drawing. FIG. 1 shows an electric circuit diagram of an electric automobile equipped with a vehicle air conditioner 1 of the present invention. The vehicle air conditioner 1 is used for a vehicle provided with an in-vehicle battery 2, and a parallel circuit of a charging device 3 and a switching device 5 connected between the in-vehicle battery 2 and a main shaft motor inverter 6(inverter for the main shaft motor M1), and is driven by being supplied with electric power from the in-vehicle battery 2 loaded on, for example, an electric automobile (HEV or PEV) or a fuel cell automobile (FCEV). The electric automobile comprises a main shaft motor M1 which is driven by electric power supplied from the in-vehicle battery 2, and an electrically operated compressor 20 which is also driven by the electric power supplied from the in-vehicle battery 2.

With regard to electric circuits of the electric automobile, one terminal of the in-vehicle battery 2 loaded on the electric automobile is connected via a switch SW1 to the charging device 3 to which a resistor R3 is serially connected, and this charging device 3 is connected to a main circuit 4 via a fuse F1 which is blown by a predetermined direct current and via a diode D1, and moreover, this main circuit 4 is connected to a main shaft motor M1 for moving the automobile. Further, the other terminal of the in-vehicle battery 2 is also connected to the main circuit 4.

The main circuit 4 comprises, for example, a plurality of unshown switching elements and diodes for absorbing a switching surge, and converts, into a three phase pseudo sinusoidal wave, a direct-current voltage from the in-vehicle battery 2, to apply it to the main shaft motor M1. This drives the main shaft motor M1 to move the automobile. It is to be noted that the diode D1 is connected in a forward direction from the fuse F1 side to a condenser C1 side. Moreover, a high current runs into the main circuit 4 from the in-vehicle battery 2 via the diode D1, but when an unnecessarily high current runs, the fuse F1 is blown to protect the diode D1.

A resistor R2 is serially connected to one terminal of the in-vehicle battery 2 via a resistor R1, while the other terminal of the resistor R2 is connected to the other terminal of the in-vehicle battery 2. The resistor R1 and resistor R2 constitute a voltage monitoring circuit 9 which monitors the voltage of the in-vehicle battery 2. Further, a switching device (hereinafter referred to as a main switching device 5) comprising switches is connected between the one terminal of the in-vehicle battery 2 and the charging device 3 and between the charging device 3 and the fuse F1. That is, the voltage monitoring circuit 9 comprising the serially connected resistors R1, R2 is connected in parallel to both terminals of the in-vehicle battery 2, and the main switching device 5 is connected in parallel to the charging device 3.

Furthermore, a branch from between the diode D1 and the main circuit 4 is connected to one terminal of the charging and discharging condenser C1, and the other terminal of the condenser C1 is connected between the in-vehicle battery 2 and the main circuit 4. This condenser C1 in connected in parallel to the main circuit 4. The diode D1, the condenser C1 and the main circuit 4 constitute the main shaft motor inverter 6 (main machine).

Furthermore, a control device 8 is connected to the main circuit 4. This control device 8 is connected to the charging device 3, and to the main switching device 5 and the voltage monitoring circuit 9 (midpoint between the resistor R1 and the resistor R2). The control device 8 detects the voltage of the in-vehicle battery 2 by the voltage monitoring circuit 9, thereby monitoring the voltage of the in-vehicle battery 2. Circuits on the vehicle side (inside a dotted frame on the upper side of the drawing) range from the in-vehicle battery 2 and the main shaft motor M1 including the control device 8.

On the other hand, the vehicle air conditioner 1 (auxiliary machine) is connected to a main circuit 14 via a fuse F11 which branches from between the charging device 3 and the fuse F1 and which is blown by a predetermined direct current, a diode D11, and a switching device for air conditioning (hereinafter referred to as an air-conditioning switching device 15) comprising a switch. A branch from between the in-vehicle battery 2 and the main circuit 4 is also connected to the main circuit 14. A branch from between the diode D11 and the air-conditioning switching device 15 is connected to one terminal of a charging and discharging condenser C11 for air conditioning, while the other terminal of the charging and discharging condenser C11 for air conditioning is connected between the in-vehicle battery 2 and the main circuit 14. It is to be noted that a high current runs into the main circuit 14 from the in-vehicle battery 2 via the diode D11, but when an unnecessarily high current runs, the fuse F11 is blown to protect the diode D11, in a similar manner as the fuse F1.

Furthermore, a resistor R12 is serially connected via a resistor R11 between the diode D11 and the air-conditioning switching device 15, and the other terminal of this resistor R12 is connected between the in-vehicle battery 2 and the main circuit 14, and moreover, the resistor R11 and the resistor R12 are connected in parallel to the condenser C11 for air conditioning. Both the resistor R11 and the resistor R12 constitute a voltage monitoring circuit 19, and this voltage monitoring circuit 19 monitors terminal voltages at both terminals of the condenser C11 for air conditioning.

The diode D11, the condenser C11 for air conditioning, the voltage monitoring circuit 19 and the main circuit 14 constitute an electrically operated compressor inverter 16 (inside a dotted frame on the lower side of the drawing; inverter for the electrically operated compressor 20). Further, similarly to the main circuit 4 described above, the main circuit 14 comprises, for example, unshown switching elements and diodes for absorbing a switching surge, and also converts, into a three phase pseudo sinusoidal wave, a direct-current voltage from the in-vehicle battery 2, to apply it to the electrically operated compressor 20 for air conditioning, and thus drives the electrically operated compressor 20 to air-condition a passenger compartment. It is to be noted that the diode D11 is connected in a forward direction from the fuse F11 side to the air-conditioning condenser C11 side.

Furthermore, the main circuit 14 comprises a control device (not shown). This control device (main circuit 14) opens the air-conditioning switching device 15 when the terminal voltages (both terminal voltages of the main circuit 14 in this case) at both ends of the condenser C11 for air conditioning which are detected by the voltage monitoring circuit 19 (dotted arrow in the drawing) are abnormal high voltages. Thus, the main circuit 14 shuts off the abnormal high voltages running into a circuit (electrically operated compressor inverter 16) on the air conditioning side, thereby preventing the main circuit 14 from being broken by the abnormal high voltages.

Next, an operation will be explained. It is to be noted that the power supply voltage of the in-vehicle battery 2 is nominal 280 V, and the charging device 3, the main switching device 5 and the air-conditioning switching device 15 are in an opened state while the vehicle and the electrically operated compressor 20 are not in operation. Moreover, the control device 8 monitors the voltage of the in-vehicle battery 2 by the voltage monitoring circuit 9, and also monitors the terminal voltages at both ends of the condenser C11 for air conditioning by the voltage monitoring circuit 19.

Furthermore, when a main switch (not shown) of the vehicle is turned on, the control device 8 first closes a contact of the charging device 3 (switch SW1), and passes a current from the in-vehicle battery 2 to the condensers C1, C11. At the same time, the charging device 3 restricts by the resistor R3 an incoming current running from the in-vehicle battery 2 to the condensers C1, C11, thereby gradually charging the condensers C1, C11.

When a predetermined time has passed after the start of the charging of the condensers C1, C11, and the charging of the condensers C1, C11 is completed, the main shaft motor M1 can be on standby, and the control device 8 closes a contact of the main switching device 5. In this case, because the charging of the condensers C1, C11 is completed, the incoming current does not run into the condensers C1, C11 even if the contact of the main switching device 5 is closed, and the direct-current voltage from the in-vehicle battery 2 can be applied to the main circuit 4. The control device 8 then closes the contact of the main switching device 5, and at the same time, opens the contact of the charging device 3 to apply the power of the in-vehicle battery 2 to the main circuit 4 of the main shaft motor inverter 6. In this way, the main circuit 4 converts, into a three phase pseudo sinusoidal wave, the direct-current voltage from the in-vehicle battery 2 to drive the main shaft motor M1, and thus moves the vehicle.

On the other hand, the main circuit 14 of the vehicle air conditioner 1 which is the auxiliary machine monitors the terminal voltages of the condenser C11 for air conditioning by the voltage monitoring circuit 19. In this case, since the charging of the condenser C11 for air conditioning has already been completed by turning on the main switch and the electrically operated compressor 20 can thus be on standby, the control device (main circuit 14) closes the air-conditioning switching device 15, and applies the power from the in-vehicle battery 2 to the main circuit 14 of the electrically operated compressor inverter 16. In this way, the main circuit 14 converts, into a three phase pseudo sinusoidal wave, the direct-current voltage from the in-vehicle battery 2 to drive the electrically operated compressor 20, and thus performs the air conditioning in the passenger compartment.

Here, the main shaft motor M1 is adapted to generate electric power when the vehicle decelerates, and to charge the in-vehicle battery 2 with the electric power to enable efficient use of energy. When the in-vehicle battery 2 is charged with the power generated by this main shaft motor M1, a charging voltage from the main shaft motor M1 is made higher than the voltage of the in-vehicle battery 2 because the charging can not be achieved if the voltage is lower than that of the in-vehicle battery 2.

However, when the in-vehicle battery 2 is charged with the power which is generated, e.g. during the deceleration of the vehicle, by the main shaft motor M1, in the case where the voltage monitoring circuit 9 detects that the voltage supplied from the in-vehicle battery 2 has reached the abnormal high voltage for some reason, the control device 8 opens the main switching device 5 to protect the fuse F1 and the diode D1 or the condenser C1 and the main circuit 4 at subsequent stages from the application of the high voltage and breakdown.

Furthermore, before the voltage of the in-vehicle battery 2 has become the abnormal high voltage to open the main switching device 5, or when back electromotive force or the like of the main shaft motor M1 runs into the electrically operated compressor inverter 16 so that the terminal voltage of the condenser C11 for air conditioning reaches the abnormal high voltage, the control device (main circuit 14) detects this by the voltage monitoring circuit 19, and opens the air-conditioning switching device 15. Thus, the control device (main circuit 14) shuts off the back electromotive force or the like of the main shaft motor M1 running into the electrically operated compressor inverter 16, thereby preventing the main circuit 14 from being broken by the back electromotive force or the like of the main shaft motor M1.

In this way, the air-conditioning switching device 15 is provided between the condenser C11 for air conditioning and the electrically operated compressor inverter 16, and the control device (main circuit 14) opens the air-conditioning switching device 15 in accordance with the terminal voltage of the condenser C11 for air conditioning when the terminal voltage of the condenser C11 for air conditioning detected by the voltage monitoring circuit 19 is the abnormal high voltage, so that when an abnormality occurs in the circuits on the vehicle side, the air-conditioning switching device 15 is opened to protect the main circuit 14 by shutting off the current running thereto. Moreover, when an abnormality occurs on the side of the electrically operated compressor inverter 16, the air-conditioning switching device 15 is also opened to protect the circuits on the vehicle side.

Furthermore, the air-conditioning switching device 15 is provided between the condenser C11 for air conditioning and the main circuit 14, and the control device (main circuit 14) closes the air-conditioning switching device 15 in accordance with the terminal voltage at both ends of the condenser C11 for air conditioning detected by the voltage monitoring circuit 19 after the charging device 3 on the vehicle side is closed and the charging of the condenser C11 for air conditioning has been completed, so that the control device (main circuit 14) judges, by itself on the circuit the air conditioning side, the completion of the charging of the condenser C11 for air conditioning to close the air-conditioning switching device 15, thus making it possible to start power supply from the in-vehicle battery 2 to the electrically operated compressor inverter 16. Thus, independent control is made possible only by the circuits on the air conditioning side, so that it is unnecessary to send and receive data between the circuits on an air conditioning side and the circuits on the vehicle side, which enables simplification of a circuit configuration of the vehicle air conditioner and a reduction in manpower and costs.

Furthermore, when the back electromotive force or the like of the main shaft motor M1 runs into the electrically operated compressor inverter 16 such that the terminal voltage of the condenser C11 for air conditioning is the abnormal high voltage, the control device (main circuit 14) opens the air-conditioning switching device 15 in accordance with the voltage applied to the electrically operated compressor inverter 16. Thus, when an abnormality occurs in the circuits on the vehicle side, the air-conditioning switching device 15 can be opened to protect the electrically operated compressor inverter 16. Also, when an abnormality occurs on the electrically operated compressor inverter 16 side, the control device (main circuit) can open the air-conditioning switching device 15 to protect the circuits on the vehicle side. Particularly, in this case, since the condenser C11 for air conditioning can be charged by the charging device 3 on the vehicle side, no specific charging device 3 is additionally needed for air conditioning.

It is to be noted that the embodiment has been described wherein the vehicle air conditioner 1 is loaded on the electric automobile (HEV or PEV) or the fuel cell automobile (FCEV), but the vehicle air conditioner 1 is not limited to those electric automobiles, and it can also be loaded on a hybrid car (HEV) to obtain similar effects of the invention.

## Claims

1. A vehicle air conditioner adapted to be driven by a battery (2) of a vehicle further provided with a parallel circuit of a charging device (3) and a switching device (5) connected between the battery (2) and an inverter (6) for a main shaft motor (M1), the vehicle air conditioner comprising:
an electric condenser (C11) for air conditioning adapted to be charged from the battery (2) via the charging device (3); and
an inverter (16) for an electrically operated compressor (20) for air conditioning adapted to be supplied with electric power from the battery via the switching device and a power supply line, **characterized in that**
a switching device (15) for air conditioning is located in the power supply line between the electric condenser (C11) for air conditioning and the main circuit (14) of the inverter (16) for said electrically operated compressor (20), and the switching device (15) for air conditioning is adapted to be opened at an abnormal high voltage in accordance with a terminal voltage of the electric condenser (C11) for air conditioning, to shut off current running to the main circuit.

2. The vehicle air conditioner according to claim 1, wherein a diode (D11) directed forward to the electric condenser side is connected on a previous stage of the electric condenser (11) for air conditioning.

3. A vehicle air conditioner adapted to be driven by a battery (2) of a vehicle further provided with a parallel circuit of a charging device (3) and a switching device (5) connected between the battery (2) and an inverter (6) for a main shaft motor (M1), the vehicle air conditioner comprising:
an electric condenser (C11) for air conditioning adapted to be charged from the battery (2) via the charging device (3); and
an inverter (16) for an electrically operated compressor (20) for air conditioning adapted to be supplied with electric power from the battery (2) via the switching device (5),
**characterized in that**
a switching device (15) for air conditioning is located in the power supply line between the electric condenser (C11) for air conditioning and the main circuit (14) of the inverter (16) for an electrically operated compressor (20), and the switching device (15) for air conditioning is adapted to be closed after completion of charging in accordance with a terminal voltage of the electric condenser (C11) for air conditioning to start power supply from the battery to the inverter (16).

4. The vehicle air conditioner according to claim 3, wherein the switching device (15) for air conditioning is adapted to be opened at an abnormal high voltage in accordance with a voltage applied to the inverter for said electrically operated compressor (20).

## Patentansprüche

1. Fahrzeugklimaanlage, die ausgebildet ist, um durch eine Batterie (2) für ein Fahrzeug betrieben zu werden, mit ferner einer Parallelschaltung einer Ladevorrichtung (3) und einer Schaltvorrichtung (5), die zwischen die Batterie (2) und einen Inverter (6) für einen Hauptwellenmotor (M1) geschaltet ist, wobei die Fahrzeugklimaanlage aufweist:
einen elektrischen Kondensator (C11) für das Klimatisieren, der ausgebildet ist, um von der Batterie (2) über die Ladevorrichtung (3) geladen zu werden, und
einen Inverter (16) für einen elektrisch betriebenen Kompressor (20) für das Klimatisieren, der ausgebildet ist, um mit elektrischer Leistung von der Batterie über die Schaltvorrichtung und eine Versorgungsleitung versorgt zu werden, **dadurch gekennzeichnet, dass**
eine Schaltvorrichtung (15) für das Klimatisieren in der Versorgungsleitung zwischen dem elektrischen Kondensator (C11) für das Klimatisieren und der Hauptschaltung (14) des Inverters (16) für den elektrisch betriebenen Kompressor (20) angeordnet ist und dass die Schaltvorrichtung (15) für das Klimatisieren ausgebildet ist, um bei einer anomal hohen Spannung in Übereinstimmung mit einer Anschlussspannung des elektrischen Kondensators (C11) für das Klimatisieren geöffnet zu werden, um einen Strom, der zu der Hauptschaltung fließt, abzuschalten.

2. Fahrzeugklimaanlage nach Anspruch 1, wobei eine Diode (D11), die in Richtung der Seite des elektrischen Kondensators gerichtet ist, in einer Vorstufe des elektrischen Kondensators (11) für das Klimatisieren angeschlossen ist.

3. Fahrzeugklimaanlage, die ausgebildet ist, um durch eine Batterie (2) eines Fahrzeugs betrieben zu werden, mit ferner einer Parallelschaltung einer Ladevorrichtung (3) und einer Schaltvorrichtung (5), die zwischen die Batterie (2) und einen Inverter (6) für einen Hauptwellenmotor (M1) geschaltet ist, wobei die Fahrzeugklimaanlage aufweist:
einen elektrischen Kondensator (C11) für das Klimatisieren, der ausgebildet ist, um von der Batterie (2) über die Ladevorrichtung (3) geladen zu werden, und
einen Inverter (16) für einen elektrisch betriebenen Kompressor (20) für das Klimatisieren, der ausgebildet ist, um mit elektrischer Leistung von der Batterie (2) über die Schaltvorrichtung (5) versorgt zu werden, **dadurch gekennzeichnet, dass**
eine Schaltvorrichtung (15) für das Klimatisieren in der Versorgungsleitung zwischen dem elektrischen Kondensator (C11) für das Klimatisieren und der Hauptschaltung (14) des Inverters (16) für einen elektrisch betriebenen Kompressor (20) angeordnet ist und dass die Schaltvorrichtung (15) für das Klimatisieren ausgebildet ist, um nach der Beendigung des Ladens in Übereinstimmung mit einer Anschlussspannung des elektrischen Kondensators (C11) für das Klimatisieren geschlossen zu werden, um die Leistungsversorgung von der Batterie zu dem Inverter (16) zu beginnen.

4. Fahrzeugklimaanlage nach Anspruch 3, wobei die Schaltvorrichtung (15) für das Klimatisieren ausgebildet ist, bei einer anomal hohen Spannung in Übereinstimmung mit einer Spannung, die an den Inverter für den elektrisch betriebenen Kompressor (20) geliefert wird, geöffnet zu werden.

## Revendications

1. Conditionneur d'air de véhicule adapté de manière à être alimenté par une batterie (2) d'un véhicule comportant, en outre, un circuit en parallèle d'un dispositif de charge (3) et d'un dispositif de commutation (5) raccordés entre la batterie (2) et un onduleur (6) pour un moteur d'arbre principal (M1), le conditionneur d'air de véhicule comprenant :
un condensateur électrique (C11) pour conditionnement d'air adapté de manière à être chargé à partir de la batterie (2) par l'intermédiaire du dispositif de charge (3) ; et
un onduleur (16) pour un compresseur électrique (20) pour conditionnement d'air adapté de manière à être alimenté par de l'énergie électrique provenant de la batterie par l'intermédiaire du dispositif de commutation et d'une ligne d'alimentation de puissance,
**caractérisé en ce que**
un dispositif de commutation (15) pour conditionnement d'air est situé sur la ligne d'alimentation de puissance entre le condensateur électrique (C11) pour conditionnement d'air et le circuit principal (14) de l'onduleur (16) pour ledit compresseur électrique (20), et le dispositif de commutation (15) pour conditionnement d'air est adapté de manière à être ouvert pour une tension anormalement élevée en fonction d'une tension de borne du condensateur électrique (C11) pour conditionnement d'air, afin de couper le courant circulant dans le circuit principal.

2. Conditionneur d'air de véhicule selon la revendication 1, dans lequel une diode (D11) dirigée dans le sens passant vers le condensateur électrique est raccordée sur un étage précédent le condensateur électrique (11) pour conditionnement d'air.

3. Conditionneur d'air de véhicule adapté de manière à être alimenté par une batterie (2) d'un véhicule comportant, en outre, un circuit parallèle d'un dispositif de charge (3) et d'un dispositif de commutation (5) raccordés entre une batterie (2) et un onduleur (6) pour un moteur d'arbre principal (M1), le conditionneur d'air de véhicule comprenant :
un condensateur électrique (C11) pour conditionnement d'air adapté de manière à être chargé à partir de la batterie (2) par l'intermédiaire du dispositif de charge (3) ; et
un onduleur (16) pour un compresseur électrique (20) pour le conditionneur d'air adapté de manière à être alimenté par une source électrique à partir de la batterie (2) par l'intermédiaire du dispositif de commutation (5),
**caractérisé en ce que**
un dispositif de commutation (15) pour conditionnement d'air est situé sur la ligne d'alimentation de puissance entre le condensateur électrique (C11) pour conditionnement d'air et le circuit principal (14) de l'onduleur (16) pour un compresseur électrique (20), et le dispositif de commutation (15) pour conditionnement d'air est adapté de manière à être fermé après achèvement de la charge en fonction d'une tension de borne du condensateur électrique (C11) pour conditionnement d'air afin de démarrer l'alimentation en puissance depuis la batterie vers l'onduleur (16).

4. Conditionneur d'air de véhicule selon la revendication 3, dans lequel le dispositif de commutation (15) pour conditionnement d'air est adapté de manière à s'ouvrir à une tension anormalement élevée en fonction d'une tension appliquée sur l'onduleur pour ledit compresseur électrique (20).
